# EUROPEAN PATENT APPLICATION

(11) **EP 4 542 755 A1**
(43) Date of publication of application: **23.04.2025**
(21) Application number: 23840016.2
(22) Date of filing: 14.07.2023
(51) Int. Cl.: H01M 50/503, H01M 50/213, H01M 50/521, H01M 50/249, H01M 50/289

(54) **BATTERY PACK AND VEHICLE COMPRISING SAME**

(30) Priority: 15.07.2022 KR 20220087497; 13.07.2023 KR 20230091204
(71) Applicant: LG Energy Solution, Ltd., Seoul 07335 (KR)
(72) Inventor: JUNG, In-Hyuk, Daejeon 34122 (KR); YANG, Jin-Oh, Daejeon 34122 (KR); OH, Kwang-Keun, Daejeon 34122 (KR); CHOI, Hae-Won, Daejeon 34122 (KR)
(74) Representative: Goddar, Heinz J.
(86) International application number: PCT/KR2023/010130
(87) International publication number: WO 2024/014925

(57) **Abstract**

A battery pack according to an embodiment of the present disclosure includes a plurality of battery cells, a filler member filled in a space between the plurality of battery cells, and a busbar assembly electrically connected to the plurality of battery cells, and having a filler member injection hole for injecting the filler member.

## Description

### TECHNICAL FIELD

The present disclosure relates to a battery pack and a vehicle comprising the same.

The present application claims the benefit of Korean Patent Application No. 10-2022-0087497 filed on July 15, 2022 and Korean Patent Application No. 10-2023-0091204 filed on July 13, 2023 with the Korean Intellectual Property Office, the disclosure of which is incorporated herein by reference in its entirety.

### BACKGROUND ART

Due to their characteristics of being easily applicable to various products and electrical properties such as high energy density, secondary batteries are commonly used in not only portable devices but also electric vehicles (EVs) or hybrid electric vehicle (HEVs) that operate by an electrical driving source. For their primary advantage of remarkably reducing the use of fossil fuels and not generating by-products from the use of energy, secondary batteries are gaining attention as a new source of energy with eco-friendliness and energy efficiency.

The types of secondary batteries widely used at present include lithium ion batteries, lithium polymer batteries, nickel cadmium batteries, nickel hydrogen batteries, nickel zinc batteries and so on. A unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be formed by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when forming the battery pack by connecting the plurality of battery cells in series/in parallel, it is general to make a battery module including at least one battery cell, and then make a battery pack or a battery rack using at least one battery module with an addition of any other component.

Recently, there is a growing demand for battery packs having higher energy density with more simple structure and requiring the reduced cost and time to manufacture, resulting in increased manufacturing efficiency.

Accordingly, there is a need for an approach to provide battery packs having higher energy density with more simple structure and requiring the reduced cost and time to manufacture, resulting in increased manufacturing efficiency, and vehicles including the same.

### SUMMARY

### Technical Problem

Accordingly, the present disclosure is directed to providing a battery pack having improved energy density with more simple structure and a vehicle comprising the same.

### Technical Solution

To solve the above-described problem, the present disclosure provides a battery pack including a plurality of battery cells; a filler member filled in a space between the plurality of battery cells; and a busbar assembly electrically connected to the plurality of battery cells, and having a filler member injection hole for injecting the filler member.

Additionally, preferably, the busbar assembly may be electrically connected to positive and negative electrodes of the battery cells in an open space of the filler member injection hole.

Additionally, preferably, the open space of the filler member injection hole may be configured to expose the positive and negative electrodes of the battery cells.

Additionally, preferably, a total area of the open space may be larger than a flow area of the filler member flowing between the battery cells after the filler member is injected.

Additionally, preferably, the filler member may have a preset viscosity, and include at least two materials.

Additionally, preferably, the filler member may be a mixture of a predetermined resin and a predetermined bead at a preset ratio.

Additionally, preferably, the predetermined resin may comprise a silicone resin.

Additionally, preferably, the predetermined bead may comprise glass bubbles.

Additionally, preferably, the busbar assembly may include a pair of busbar covers disposed on one side of the plurality of battery cells, and having the filler member injection hole; and a sub busbar disposed between the pair of busbar covers and connected to the positive and negative electrodes of the battery cells.

Additionally, preferably, the pair of busbar covers may comprise a polyimide film.

Additionally, preferably, the sub busbar may comprise a single layer, and be inserted in between the pair of busbar covers.

Additionally, preferably, the sub busbar may include a busbar bridge inserted in between the pair of busbar covers; a positive connection portion extending from the busbar bridge, exposed within the open space of the filler member injection hole, and connected to the positive electrodes of the battery cells; and a negative connection portion extending from the busbar bridge, exposed within the open space of the filler member injection hole, and connected to the negative electrodes of the battery cells.

Additionally, preferably, the filler member injection hole may include a plurality of filler member injection holes, and the plurality of filler member injection holes may include a positive busbar hole through which the positive connection portion is exposed, and having an open space which is larger in size than the positive connection portion; and a negative busbar hole through which the negative connection portion is exposed, and having an open space which is larger in size than the negative connection portion.

Additionally, preferably, the filler member injection hole may include a plurality of filler member injection holes, and each of the plurality of filler member injection holes may expose the positive connection portion and the negative connection portion in a single open space.

Additionally, preferably, each of the plurality of filler member injection holes may have the open space which is larger than a total size of the positive connection portion and the negative connection portion.

Additionally, preferably, the positive busbar hole and the negative busbar hole may be disposed opposite each other with the busbar bridge interposed therebetween.

The present disclosure further provides a method for manufacturing a battery pack, including placing a cooling unit between a plurality of battery cells and aligning them such that the battery cells and the cooling unit are received through a side structure unit; electrically connecting the plurality of battery cells in an open space of a filler member injection hole of a busbar assembly having the filler member injection hole above the battery cells; and injecting and applying the filler member from top to bottom of the battery cells along a vertical direction of the battery cells through the open space of the filler member injection hole.

Additionally, preferably, the filler member may be a mixture of a predetermined resin and a predetermined bead at a preset ratio.

Additionally, preferably, the mix ratio of the predetermined resin and the predetermined bead may be 100 : 60 (resin : glass bubbles).

The present disclosure further provides a vehicle including at least one battery pack according to the above-described embodiments.

### Advantageous Effects

According to the above-described embodiments, it may be possible to provide a battery pack having improved energy density with more simple structure and a vehicle comprising the same.

Additionally, according to the above-described embodiments, it may be possible to provide the battery pack that requires the reduced cost and time to manufacture, resulting in increased manufacturing efficiency, and the vehicle comprising the same.

### BRIEF DESCRIPTION OF THE DRAWINGS

The accompanying drawings illustrate exemplary embodiments of the present disclosure, and together with the detailed description of the present disclosure described below, serve to provide a further understanding of the technical aspect of the present disclosure, and thus the present disclosure should not be construed as being limited to the drawings.
FIG. 1 is a diagram illustrating a battery pack according to an embodiment of the present disclosure.
FIG. 2 is an exploded perspective view of the battery pack of FIG. 1.
FIG. 3 is a diagram illustrating a battery cell of the battery pack of FIG. 2.
FIG. 4 is a partial cross-sectional view showing the internal structure of the battery cell of FIG. 3.
FIG. 5 is a partial cross-sectional view showing the upper part structure of the battery cell of FIG. 3.
FIG. 6 is a partial cross-sectional view showing the lower part structure of the battery cell of FIG. 3.
FIG. 7 is a bottom view of the battery cell of FIG. 3.
FIG. 8 is a diagram illustrating a busbar assembly of the battery pack of FIG. 2.
FIG. 9 is a diagram illustrating a connection busbar unit of the busbar assembly of FIG. 8.
FIG. 10 is an exploded perspective view of the connection busbar unit of FIG. 9.
FIG. 11 is an enlarged diagram illustrating the main parts of the connection busbar unit of FIG. 9.
FIG. 12 is a diagram illustrating a filler member injection hole structure according to another embodiment of the connection busbar unit of FIG. 11.
FIG. 13 is a diagram illustrating a cooling unit of the battery pack of FIG. 2.
FIG. 14 is an exploded perspective view of the cooling unit of FIG. 13.
FIG. 15 is a cross-sectional view of the cooling unit of FIG. 13.
FIG. 16 is a diagram illustrating a side structure unit of the battery pack of FIG. 2.
FIG. 17 is a diagram illustrating a main plate of the side structure unit of FIG. 16.
FIGS. 18 and 19 are diagrams illustrating a coupling structure of battery cells and cooling units through the side structure unit of FIG. 16.
FIGS. 20 to 22 are diagrams illustrating pack case structure formation through filler member injection of the battery pack of FIG. 2.
FIG. 23 is a graph showing test results of viscosity and manufacturing cost as a function of a mix ratio of a filler member of the battery pack of FIG. 2.
FIG. 24 is a diagram illustrating a vehicle according to an embodiment of the present disclosure.

### BEST MODE

The present disclosure will become apparent by describing an exemplary embodiment of the present disclosure in detail with reference to the accompanying drawings. The embodiment described herein is provided by way of illustration to help an understanding of the present disclosure, and it should be understood that various modifications may be made to the present disclosure according to other embodiments. Additionally, to help an understanding of the present disclosure, the accompanying drawings are not shown in true scale and may depict some exaggerated elements.

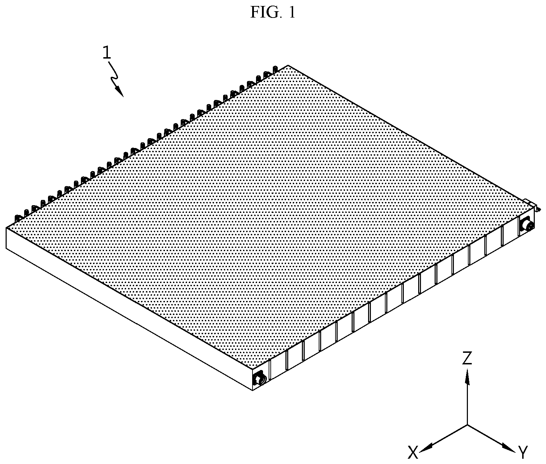

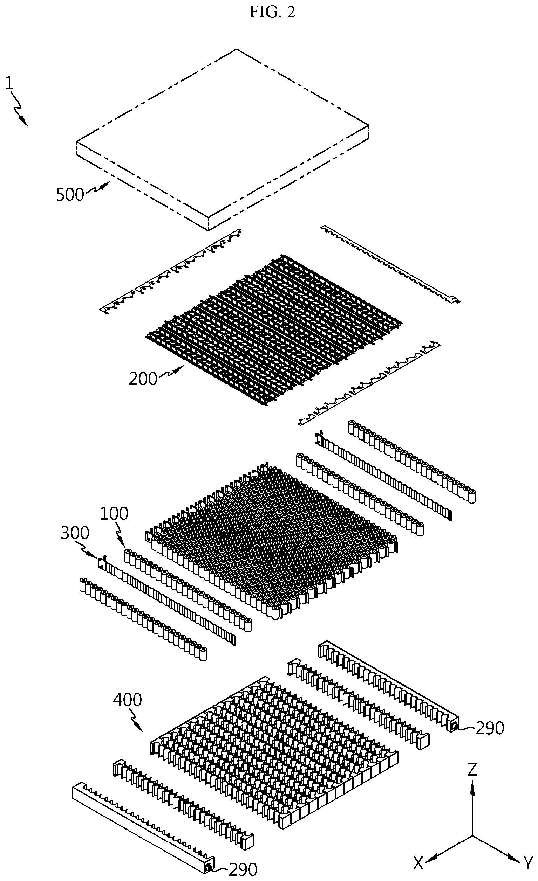

FIG. 1 is a diagram illustrating a battery pack according to an embodiment of the present disclosure, and FIG. 2 is an exploded perspective view of the battery pack of FIG. 1.

Referring to FIGS. 1 and 2, the battery pack 1 may be used as an energy source in an electric vehicle or a hybrid electric vehicle. Hereinafter, the battery pack 1 used in the electric vehicle will be described in more detail in the following related drawings.

The battery pack 1 may include a plurality of battery cells 100, a busbar assembly 200 and a filler member 500.

The plurality of battery cells 100 may include secondary batteries, for example, cylindrical secondary batteries, pouch type secondary batteries or prismatic secondary batteries. Hereinafter, this embodiment will be described based on cylindrical secondary batteries as the plurality of battery cells 100. Hereinafter, each battery cell 100 will be described in more detail with reference to the following related drawings.

The filler member 500 may be filled in the space between the plurality of battery cells 100. Here, the filler member 500 may be a potting resin, and may be mixed with beads such as glass bubbles. The filler member 500 will be described in more detail in the following related description.

The busbar assembly 200 may be electrically connected to the plurality of battery cells 100. The busbar assembly 200 may have filler member injection holes 242, 244 for injection of the filler member 500.

In this embodiment, the filler member 500 may be directly injected into the space between the battery cells 100 faster through the filler member injection holes 242, 244 of the busbar assembly 200, and it may be possible to further reduce the process time of the injection process for injection of the filler member 500, thereby significantly increasing the process efficiency.

Additionally, the busbar assembly 200 may be electrically connected to positive electrode 40 and negative electrode 20a of the battery cells 100 in the open space of the filler member injection holes 242, 244.

In this embodiment, it may be possible to inject the filler member 500 and electrically connect the battery cells 100 through the filler member injection holes 242, 244 at the same time, thereby providing the busbar assembly 200 of more simple structure, resulting in increased manufacturing efficiency due to the simple structure of the battery pack 1.

Hereinafter, the battery pack 1 according to this embodiment will be described in more detail.

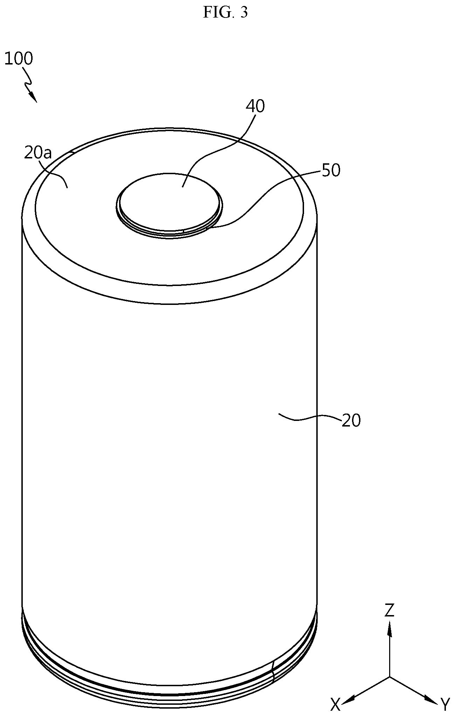

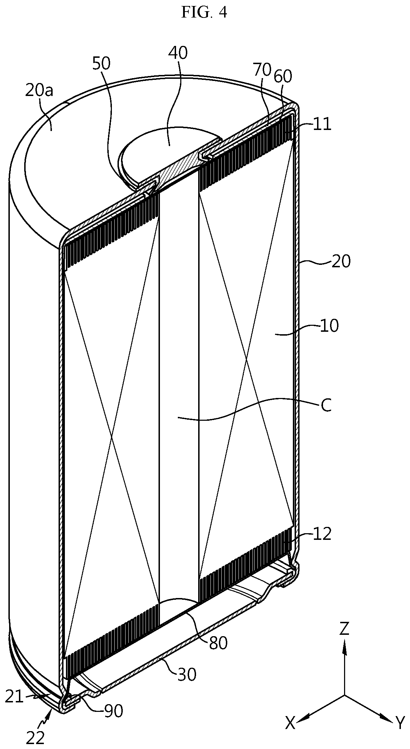

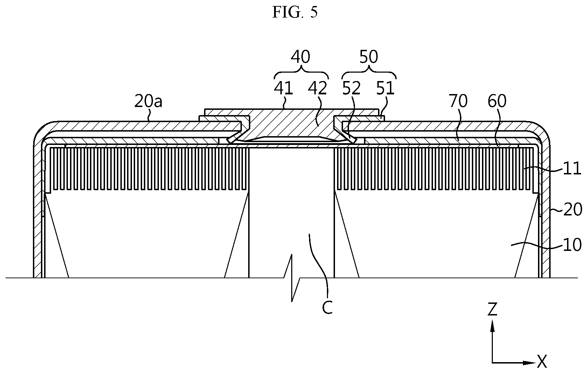

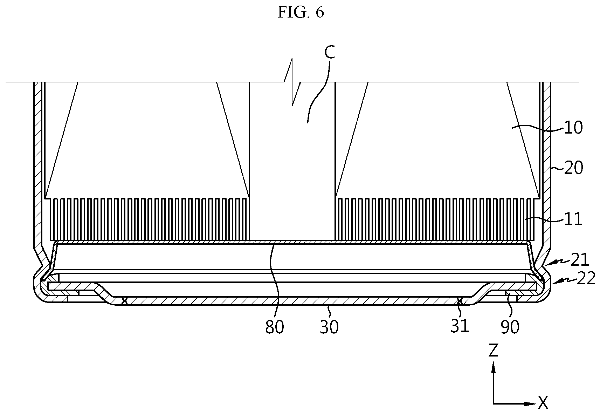

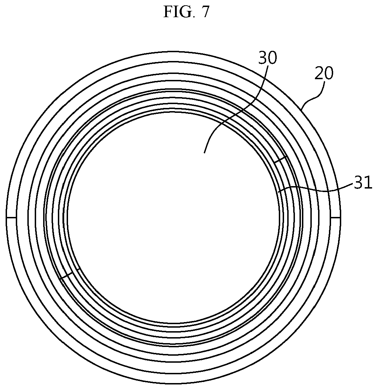

FIG. 3 is a diagram illustrating the battery cell of the battery pack of FIG. 2, FIG. 4 is a partial cross-sectional view showing the internal structure of the battery cell of FIG. 3, FIG. 5 is a partial cross-sectional view showing the upper part structure of the battery cell of FIG. 3, FIG. 6 is a partial cross-sectional view showing the lower part structure of the battery cell of FIG. 3, and FIG. 7 is a bottom view of the battery cell of FIG. 3.

Referring to FIGS. 3 to 7, the battery cell 100 includes an electrode assembly 10, a battery can 20, a cap plate 30 and a first electrode terminal 40. In addition to the above-described components, the battery cell 100 may further include an insulation gasket 50 and/or an upper current collector plate 60 and/or an insulation plate 70 and/or a lower current collector plate 80 and/or a sealing gasket 90.

The electrode assembly 10 includes a first electrode plate having a first polarity, a second electrode plate having a second polarity and a separator interposed between the first electrode plate and the second electrode plate. The first electrode plate is a positive or negative electrode plate, and the second electrode plate corresponds to an electrode plate having the opposite polarity to the first electrode plate.

The electrode assembly 10 may have, for example, a jelly-roll shape. That is, the electrode assembly 10 may be formed by winding a stack around a winding center C, the stack formed by stacking the first electrode plate, the separator and the second electrode plate at least once in that order. In this case, the separator may be disposed on the outer circumferential surface of the electrode assembly 10 for insulation from the battery can 20.

The first electrode plate includes a first electrode current collector and a first electrode active material coated on one or two surfaces of the first electrode current collector. An uncoated portion exists, in which the first electrode active material is not coated, at one end of the first electrode current collector in the widthwise direction (parallel to the Z axis). The uncoated portion acts as a first electrode tab. The first electrode tab 11 is disposed at the upper part in the heightwise direction (parallel to the Z axis) of the electrode assembly 10 received in the battery can 20.

The second electrode plate includes a second electrode current collector and a second electrode active material coated on one or two surfaces of the second electrode current collector. An uncoated portion exists, in which the second electrode active material is not coated, at the other end of the second electrode current collector in the widthwise direction (parallel to the Z axis). The uncoated portion acts as a second electrode tab 12. The second electrode tab 12 is disposed at the lower part in the heightwise direction (parallel to the Z axis) of the electrode assembly 10 received in the battery can 20.

The battery can 20 is a cylindrical container having an open portion on bottom, and is made of a metal having conductive properties. The side and the upper surface of the battery can 20 are integrally formed. The upper surface of the battery can 20 is approximately flat. The battery can 20 accommodates the electrode assembly 10 together with an electrolyte through the open portion on bottom.

The battery can 20 is electrically connected to the second electrode tab 12 of the electrode assembly 10. Accordingly, the battery can 20 has the same polarity as the second electrode tab 12.

The battery can 20 includes a beading portion 21 and a crimping portion 22 at the lower end. The beading portion 21 is disposed below the electrode assembly 10. The beading portion 21 is formed by beading the outer circumferential surface of the battery can 20. The beading portion 21 may prevent the electrode assembly 10 having a size corresponding to the width of the battery can 20 from slipping out of the open portion on bottom of the battery can 20, and may act as a support on which the cap plate 30 is seated.

The crimping portion 22 is disposed below the beading portion 21. The crimping portion 22 is extended and bent to cover the outer circumferential surface of the cap plate 30 disposed below the beading portion 21 and part of the lower surface of the cap plate 30.

The cap plate 30 is the component made of a metal having conductive properties, and covers the open portion on bottom of the battery can 20. That is, the cap plate 30 forms a lower surface of the battery cell 100. The cap plate 30 is seated on the beading portion 21 of the battery can 20 and secured by the crimping portion 22. The sealing gasket 90 may be interposed between the cap plate 30 and the crimping portion 22 of the battery can 20 to ensure the sealability of the battery can 20.

The cap plate 30 may further include a venting portion 31 to prevent the internal pressure rise caused by gas generation in the battery can 20. The venting portion 31 corresponds to an area of the cap plate 30 having a smaller thickness than the surrounding area. The venting portion 31 is structurally weaker than the surrounding area. Accordingly, when the internal pressure increases above a predetermined level due to a fault in the battery cell 100, the venting portion 31 ruptures to force gas generated in the battery can 20 out.

A hole may be formed in the upper surface of the battery can 20 in advance before placing the first electrode terminal 40 and the insulation gasket 50. The formation of the hole is not limited thereto and may be performed by any other method. For example, the hole may be formed by inserting the first electrode terminal 40, or the hole may be formed in advance with a different diameter or by notching or pre-notching the upper surface to insert the first electrode terminal 40. That is, the hole may be expanded to a desired size, or the hole may be formed in a small size by notching and then expanded to the desired size. Furthermore, any other method may be used to form the hole.

The battery cell 100 according to an embodiment of the present disclosure has a structure in which both the positive and negative terminals are present at the upper part, and thus the upper part structure is more complicated than the lower part structure. Accordingly, the cap plate 30 that forms the lower surface of the battery cell 100 may have the venting portion 31 for proper venting of gas generated in the battery can 20.

The venting portion 31 may be continuously formed in a circular pattern on the cap plate 30. The venting portion 31 is not limited thereto, and may be discontinuously formed in a circular pattern on the cap plate 30, and may be formed in a straight line pattern or any other pattern.

The first electrode terminal 40 is made of a metal having conductive properties, and is electrically connected to the first electrode tab 11 of the electrode assembly 10 through the upper surface of the battery can 20. Accordingly, the first electrode terminal 40 has the first polarity. The first electrode terminal 40 may be electrically insulated from the battery can 20 having the second polarity.

The first electrode terminal 40 includes an exposed terminal portion 41 and an inserted terminal portion 42. The exposed terminal portion 41 is exposed to the outside of the battery can 20. The exposed terminal portion 41 is disposed at the center of the upper surface of the battery can 20. The inserted terminal portion 42 is electrically connected to the first electrode tab 11 through the center of the upper surface of the battery can 20. The inserted terminal portion 42 may be riveted on the inner surface of the battery can 20.

The upper surface of the battery can 20 and the first electrode terminal 40 have the opposite polarities and face the same direction. Additionally, a step may be formed between the first electrode terminal 40 and the upper surface of the battery can 20. Specifically, when the upper surface of the battery can 20 has a flat shape as a whole or protrudes upward from the center, the exposed terminal portion 41 of the first electrode terminal 40 may protrude upward above the upper surface of the battery can 20. On the contrary, when the upper surface of the battery can 20 has an inward curved shape in the downward direction from the center, that is to say, a direction toward the electrode assembly 10, the upper surface of the battery can 20 may protrude upward above the exposed terminal portion 41 of the first electrode terminal 40.

The insulation gasket 50 is interposed between the battery can 20 and the first electrode terminal 40 to prevent the contact between the battery can 20 and the first electrode terminal 40 having the opposite polarities. The upper surface of the battery can 20 having an approximately flat shape may act as the second electrode terminal of the battery cell 100.

The insulation gasket 50 includes an exposed portion 51 and an inserted portion 52. The exposed portion 51 is interposed between the exposed terminal portion 41 of the first electrode terminal 40 and the battery can 20. The inserted portion 52 is interposed between the inserted terminal portion 42 of the first electrode terminal 40 and the battery can 20. The insulation gasket 50 may be made of, for example, a resin having insulating properties.

When the insulation gasket 50 is made of a resin, the insulation gasket 50 may be coupled to the battery can 20 and the first electrode terminal 40, for example, by heat welding. In this case, it is possible to enhance sealability at the coupling interface between the insulation gasket 50 and the first electrode terminal 40 and sealability at the coupling interface between the insulation gasket 50 and the battery can 20.

The entire remaining area except the area occupied by the first electrode terminal 40 and the insulation gasket 50 in the upper surface of the battery can 20 corresponds to the second electrode terminal 20a having the opposite polarity to the first electrode terminal 40.

The battery cell 100 according to an embodiment of the present disclosure includes the first electrode terminal 40 having the first polarity and the second electrode terminal 20a having the second polarity electrically insulated from the first electrode terminal 40 together on one side in the lengthwise direction (parallel to the Z axis). That is, since the battery cell 100 according to an embodiment of the present disclosure has the pair of electrode terminals 40, 20a in the same direction, it is possible to place an electrical connection component such as the busbar assembly 200 on only one side of the battery cells 100 when electrically connecting the plurality of battery cells 100. This may lead to the simple structure of the battery pack 1 and improved energy density.

Hereinafter, the busbar assembly 200 for electrical connection to the plurality of battery cells 100 will be described in more detail.

Referring back to FIG. 2, the busbar assembly 200 may be disposed on one side of the battery cells 100, to be specific, the upper side (+Z axis direction) of the battery cells 100 and electrically connected to the plurality of battery cells 100. The electrical connection of the busbar assembly 200 may be a parallel and/or series connection.

The busbar assembly 200 may be electrically connected to the first electrode terminal 40 (see FIG. 3) of the plurality of battery cells 100, having the first polarity, and the second electrode terminal 20a (see FIG. 3) of the battery can 20, having the second polarity, and may be electrically connected to an external charge/discharge line through a connector terminal 290. Here, the first polarity may be positive, and the second polarity may be negative.

Hereinafter, the components of the busbar assembly 200 will be described in more detail.

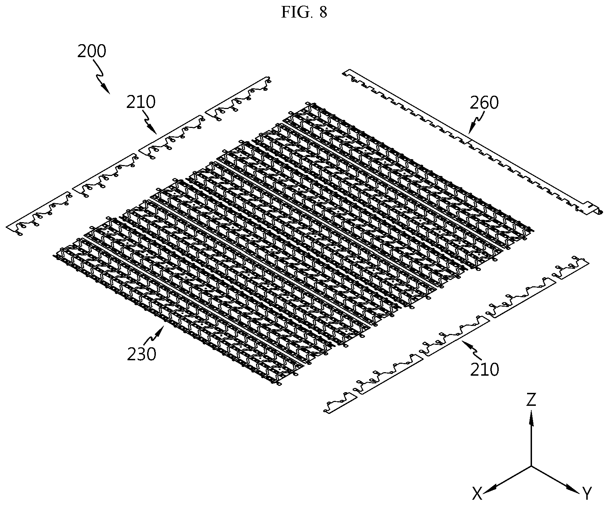

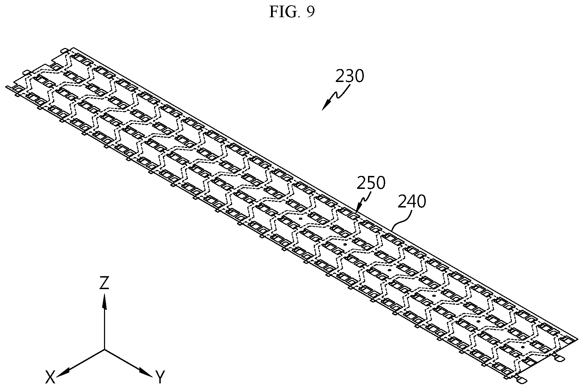

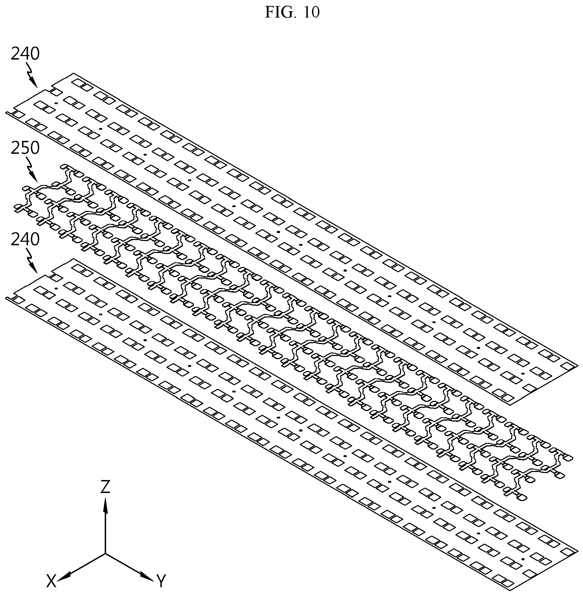

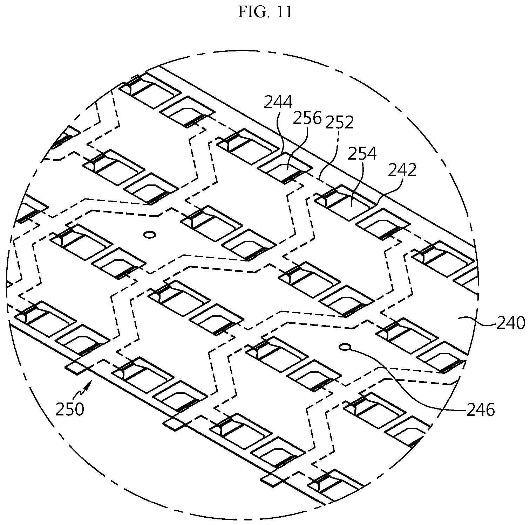

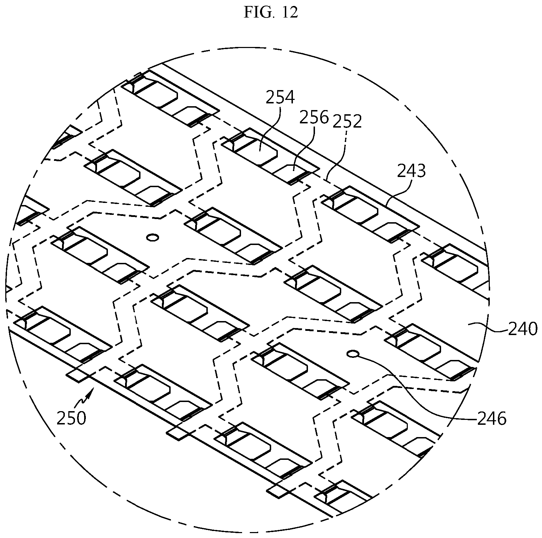

FIG. 8 is a diagram illustrating the busbar assembly of the battery pack of FIG. 2, FIG. 9 is a diagram illustrating a connection busbar unit of the busbar assembly of FIG. 8, FIG. 10 is an exploded perspective view of the connection busbar unit of FIG. 9, FIG. 11 is an enlarged diagram illustrating the main parts of the connection busbar unit of FIG. 9, and FIG. 12 is a diagram illustrating a filler member injection hole structure according to another embodiment of the connection busbar unit of FIG. 11.

Referring to FIGS. 8 to 11 and FIG. 2, the busbar assembly 200 may include a main busbar unit 210, the connection busbar unit 230, an interconnection board 260 and the connector terminal 290.

The main busbar unit 210 may include a plurality of main busbar units 210, and may be electrically connected to the battery cells 100 disposed at the outermost side of the battery pack 1 in the lengthwise direction (Y axis direction). The main busbar units 210 may be electrically connected to the connector terminal 290 as described below.

The connection busbar unit 230 may be disposed between the main busbar units 210 in the lengthwise direction (Y axis direction) of the battery pack 1, and may be electrically connected to the plurality of battery cells 100 and cover the plurality of battery cells 100.

The connection busbar unit 230 may include a single connection busbar unit 230 in a sufficient size to cover all the plurality of battery cells 100 or a plurality of connection busbar units 230 to cover the plurality of battery cells 100. Hereinafter, this embodiment will be described based on the plurality of connection busbar units 230.

Each of the plurality of connection busbar units 230 may include a busbar cover 240 and a sub busbar 250.

The busbar cover 240 may cover the upper side of the plurality of battery cells 100, and may have an approximately flat plate shape. The shape and size of the busbar cover 240 may change depending on the number of battery cells 100 or capacity required for the battery pack 1.

The busbar cover 240 may comprise an insulating material. For example, the busbar cover 240 may comprise a polyimide film. The busbar cover 240 is not limited thereto and may include any other insulation member made of an insulating material.

The busbar cover 240 may include a pair of busbar covers 240 having matching shapes and sizes in the up-down direction (Z axis direction) of the battery pack 1 and coupled to each other. Here, the sub busbar 250 as described below may be a single layer, and may be inserted between the pair of busbar covers 240.

The pair of busbar covers 240 may include a positive busbar hole 242, a negative busbar hole 244 and a guide hole 246.

The positive busbar hole 242 and the negative busbar hole 244 may be the above-described filler member injection holes 242, 244. That is, the filler member injection holes 242, 244 may play a role in guiding the connection to the positive electrode 40 and the negative electrode 20a of the battery cells 100. That is, the filler member injection holes 242, 244 may be formed in the pair of busbar covers 240.

Specifically, the filler member injection holes 242, 244 may include a plurality of filler member injection holes 242, 244.

The plurality of filler member injection holes 242, 244 may include the positive busbar hole 242 through which a positive connection portion 254 as described below is exposed, and having a larger open space than the size of the positive connection portion 254 and the negative busbar hole 244 through which a negative connection portion 256 as described below is exposed and having a larger open space than the size of the negative connection portion 256. Here, the positive busbar hole 242 and the negative busbar hole 244 may be disposed opposite each other with a busbar bridge 252 as described below interposed between.

Hereinafter, the positive busbar hole 242 and the negative busbar hole 244 of the filler member injection holes 242, 244 will be described in more detail.

The positive busbar hole 242 may have the open space of a predetermined size, and may include a plurality of positive busbar holes 242. The positive busbar hole 242 may expose the positive connection portion 254 as described below. Here, the positive busbar hole 242 may have the open space that is larger than the size of the positive connection portion 254 as described below to improve the process efficiency and increase the injection efficiency of the filler member 500 as described below.

The positive busbar hole 242 may efficiently guide the electrical connection of the positive connection portion 254 as described below and the first electrode terminal 40 (see FIG. 3) which is the positive electrode of the battery cells 100.

Furthermore, it may be possible to remarkably increase the injection efficiency of the filler member 500 as described below when injecting the filler member 500 through the open space of the positive busbar hole 242. Specifically, the filler member 500 comprising the potting resin 500 as described below may be injected more directly in the vertical direction (Z axis direction) downward from the top of the battery pack 1 through the open space of the positive busbar hole 242, thereby remarkably improving the injection efficiency between the battery cells 100.

The negative busbar hole 244 may be disposed opposite the positive busbar hole 242, and have the open space of a predetermined size in the same way as the positive busbar hole 242. The negative busbar hole 244 may include a plurality of negative busbar holes 244. Here, the negative busbar hole 244 may have the open space that is larger than the size of the negative connection portion 256 as described below to improve the process efficiency and increase the injection efficiency of the filler member 500 as described below.

The negative busbar hole 244 may efficiently guide the electrical connection of the negative connection portion 256 as described below and the battery can 20 (see FIG. 3) which is the negative electrode of the battery cells 100, to be specific, the second electrode terminal 20a.

Furthermore, it may be possible to remarkably increase the injection efficiency of the filler member 500 as described below when injecting the filler member 500 through the open space of the negative busbar hole 244. Specifically, the filler member 500 comprising the potting resin 500 as described below may be injected more directly in the vertical direction (Z axis direction) downward from the top of the battery pack 1 through the open space of the negative busbar hole 244, thereby remarkably improving the injection efficiency between the battery cells 100.

Meanwhile, the total area of the open space of the filler member injection holes 242, 244, i.e., the open space of the positive busbar hole 242 and the open space of the negative busbar hole 244, may be larger than the flow area of the filler member 500 flowing between the battery cells 100 during the injection of the filler member 500. This is to prevent delays in injection of the filler member 500, thereby preventing the prolonged injection process.

Meanwhile, referring to FIG. 12, the open space of the filler member injection hole 243 may be configured to expose both the positive electrode 40 (see FIG. 3) and the negative electrode 20 (see FIG. 3) of the battery cells 100. Specifically, each of the plurality of filler member injection holes 243 may expose both the positive connection portion 254 and the negative connection portion 256 as described below through a single open space. Accordingly, in the open space of each filler member injection hole 243, the positive electrode 40 (see FIG. 3) and the negative electrode 20 (see FIG. 3) of the battery cells 100 may be connected to the positive connection portion 254 and the negative connection portion 256 as described below.

By the above-described exemplary configuration of the present disclosure, it may be possible to establish the electrical connection between the positive electrode 40 (see FIG. 3) and the negative electrode 20 (see FIG. 3) of the battery cells 100 and the positive connection portion 254 and the negative connection portion 256 as described below in the single open space of the filler member injection hole 243, thereby further simplifying the process of forming the filler member injection hole 243 of the pair of busbar covers 240.

Additionally, the plurality of filler member injection holes 243 may have the open space that is larger than the total size of the positive connection portion 254 and the negative connection portion 256 as described below. Accordingly, it may be possible to ensure convenience of the electrical connection process in the open space when establishing the electrical connection. Additionally, it may be possible to improve the injection efficiency of the filler member 500 through the filler member injection hole 243.

Referring back to FIGS. 8 to 11 and FIG. 2, the guide hole 246 may guide the assembly position of the busbar assembly 200. Specifically, the guide hole 246 may guide the placement of the connection busbar unit 230 in position by securing the connection busbar unit 230 to the side structure unit 400.

The guide hole 246 may include a plurality of guide holes 246. The plurality of guide holes 246 may allow busbar guide protrusions 416 of the side structure unit 400 as described below to be inserted therein.

The sub busbar 250 may be configured to electrically connect the positive or first electrode terminal 40 and the negative or second electrode terminal 20a of the plurality of battery cells 100, and may be disposed on the busbar cover 240 or inserted between the pair of busbar covers 240. Hereinafter, this embodiment will be described based on the sub busbar 250 inserted into or coupled to the busbar cover 240.

The sub busbar 250 may include the busbar bridge 252, the positive connection portion 254 and the negative connection portion 256.

The busbar bridge 252 may be inserted into the pair of busbar covers 240, and may be formed with a predetermined length along the widthwise direction (X axis direction) of the battery pack 1. The busbar bridge 252 may have a shape corresponding to the arrangement structure of the battery cells 100 in the widthwise direction (X axis direction) of the battery pack 1 to increase the electrical connection efficiency with the battery cells 100. Accordingly, in this embodiment, the busbar bridge 252 may be disposed in a zigzag pattern in the widthwise direction (X axis direction) of the battery pack 1.

The busbar bridge 252 may include a plurality of busbar bridges 252. The plurality of busbar bridges 252 may be inserted into the busbar cover 240 and arranged spaced a predetermined distance apart from each other in the lengthwise direction (Y axis direction) of the battery pack 1.

The busbar bridge 252 may be made of a conductive material. For example, the busbar bridge 252 may be made of a metal such as aluminum or copper. The busbar bridge 252 is not limited thereto and may be made of any other material for the electrical connection.

The positive connection portion 254 may integrally extend and protrude from the busbar bridge 252, and be disposed in the positive busbar hole 242. Specifically, the positive connection portion 254 may be exposed within the positive busbar hole 242, i.e., the open space of the filler member injection hole 242.

The positive connection portion 254 may be electrically connected to the first electrode terminal 40 (see FIG. 3) which is the positive electrode of the battery cell 100. The electrical connection may be made through a welding process for electrical connection such as laser welding or ultrasonic welding.

Since the connection between the positive connection portion 254 and the positive electrode 40 (the first electrode terminal) of the battery cell 100 is made in the open space of the positive busbar hole 242, the welding process for the connection may be performed in the open space directly without any additional process when making the connection.

The negative connection portion 256 may integrally extend from the busbar bridge 252 and protrude in the opposite direction to the positive connection portion 254, and may be disposed in the negative busbar hole 244. Specifically, the negative connection portion 256 may be exposed within the negative busbar hole 244, i.e., the open space of the filler member injection hole 244.

The negative connection portion 256 may be electrically connected to the second electrode terminal 20a (see FIG. 3) which is the negative electrode of the battery cell 100. The electrical connection may be made through a welding process for the electrical connection such as laser welding or ultrasonic welding.

Since the connection between the negative connection portion 256 and the negative electrode 20a (the second electrode terminal) of the battery cell 100 is made in the open space of the negative busbar hole 244, the welding process for the connection may be performed in the open space directly without any additional process when making the connection.

The interconnection board 260 may be connected to the external sensing line, and disposed at one end (-Y axis direction) of the battery pack 1. The location of the interconnection board 260 may change according to the design, and the interconnection board 260 may be disposed at any other location for connection to the external sensing line. Furthermore, the interconnection board 260 may include a plurality of interconnection boards 260 according to the number of battery cells 100 or capacity of the battery pack 1.

The interconnection board 260 may be exposed to the outside of the battery pack 1 for connection to the external sensing line. The external sensing line may connect the interconnection board 260 to a battery management system (not shown). The battery management system may determine the state of charge (SOC) of the battery cells connected in parallel based on the voltage of the battery cells.

The interconnection board 260 may include thermistor to determine the temperature condition of the battery cells 100. The thermistor may be embedded in the interconnection board 260 or mounted outside of the interconnection board 260. The connector terminal 290 may include a pair of connector terminals 290. The pair of connector terminals 290 may be used for connection to the external charge/discharge line, and may be high voltage connector terminals.

Referring back to FIG. 2, the battery pack 1 may include a cooling unit 300.

The cooling unit 300 is configured to cool the battery cells 100, and may be positioned below the busbar assembly 200 (-Z axis direction) between the plurality of battery cells 100 along the lengthwise direction (Y axis direction) of the battery pack 1.

The cooling unit 300 may include a plurality of cooling units 300.

The plurality of cooling units 300 may be arranged facing the plurality of battery cells 100 in the widthwise direction (X axis direction) of the battery pack 1. Here, the plurality of cooling units 300 may be positioned in contact with the facing battery cells 100 to increase the cooling performance.

Hereinafter, the cooling unit 300 will be described in more detail.

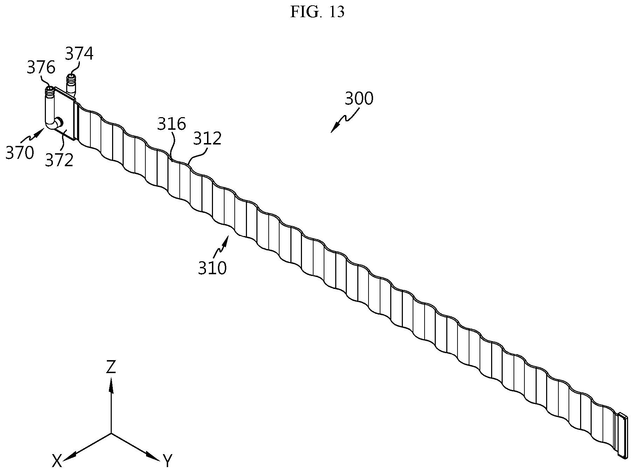

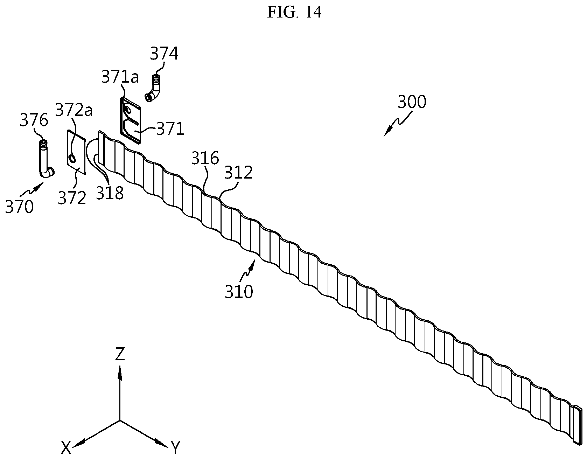

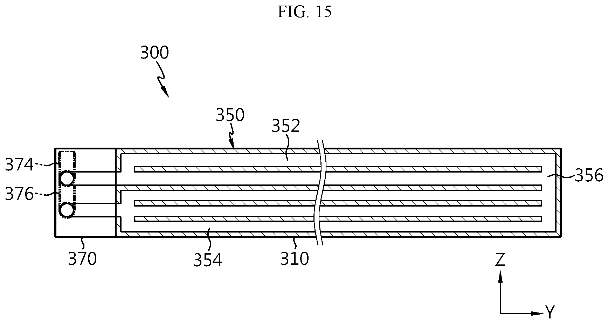

FIG. 13 is a diagram illustrating the cooling unit of the battery pack of FIG. 2, FIG. 14 is an exploded perspective view of the cooling unit of FIG. 13, and FIG. 15 is a cross-sectional view of the cooling unit of FIG. 13.

Referring to FIGS. 13 to 15 and FIG. 2, the cooling unit 300 may include a cooling tube 310, a cooling channel 350 and a cooling fluid inlet/outlet 370.

The cooling tube 310 may be formed with a predetermined size along the lengthwise direction (Y axis direction) of the battery pack 1 and disposed between the plurality of battery cells 100, and include the cooling channel 350 in which a cooling fluid as described below circulates. In this embodiment, the cooling fluid may be water, and in addition to the water, may include at least one fluid that may exchange heat with the surrounding environment.

The cooling tube 310 may be formed in a shape corresponding to the outer surface of the plurality of battery cells 100 facing the cooling tube 310 in the widthwise direction (X axis direction) of the battery pack 1.

The cooling tube 310 may have a plurality of convex portions 312 and a plurality of concave portions 316 in an alternating manner along the lengthwise direction (Y axis direction) of the battery pack 1, the convex portions 312 and the concave portions 316 having convex and concave shapes in the widthwise direction (X axis direction) of the battery pack 1, respectively.

The cooling tube 310 may be disposed in contact with the outer surface of the plurality of battery cells 100 to further increase the cooling performance of the battery cells 100. The cooling tube 310 may be adhered and secured to the plurality of battery cells 100 through the filler member 500 as described below or an adhesive member.

A cooling fluid guide portion 318 may be disposed at one end (-Y axis direction) of the cooling tube 310 to guide the cooling fluid into the cooling channel 350 as described below. The cooling fluid guide portion 318 may be disposed at one end (-Y axis direction) of the cooling tube 310 in the lengthwise direction (Y axis direction) and may include a pair of cooling fluid guide portions 318. Any one of the pair of cooling fluid guide portions 318 may be in communication with an upper channel 352 of the cooling channel 350 as described below, and the other may be in communication with a lower channel 354 of the cooling channel 350 as described below. Specifically, any one of the pair of cooling fluid guide portions 318 may be disposed at the upper side (+Z axis direction) in the heightwise direction (Z axis direction) of the cooling tube 310 to communicate with the upper channel 352 as described below, and the other may be disposed at the lower side (-Z axis direction) in the heightwise direction (Z axis direction) of the cooling tube 310 to communicate with the lower channel 354 as described below.

The cooling channel 350 may allow the cooling fluid for cooling the battery cells 100 to circulate. The cooling channel 350 may be disposed in the cooling tube 310 and connected in communication with the cooling fluid inlet/outlet 370 as described below.

The cooling channel 350 may include the upper channel 352, the lower channel 354 and a connection channel 356.

The upper channel 352 may be disposed at the upper part of the cooling tube 310 so that it is located close to the busbar assembly 200, and formed with a predetermined length along the lengthwise direction (X axis direction) of the cooling tube 310. The upper channel 352 may be connected in communication with a cooling fluid feed port 374 of the cooling fluid inlet/outlet 370.

The upper channel 352 may include at least one upper channel 352. Hereinafter, this embodiment is described based on a plurality of upper channels 352 to ensure the cooling performance.

The lower channel 354 may be disposed at the lower part of the cooling tube 310 (-Z axis direction) spaced apart from the at least one upper channel 352, and formed with a predetermined length along the lengthwise direction (X axis direction) of the cooling tube 310. The lower channel 354 may be connected in communication with a cooling fluid exit port 376 of the cooling fluid inlet/outlet 370.

The lower channel 354 may include at least one lower channel 354. Hereinafter, this embodiment is described based on a plurality of lower channels 354 to ensure the cooling performance.

The connection channel 356 may connect the at least one upper channel, in this embodiment, the plurality of upper channels 352 to the at least one lower channel, in this embodiment, the plurality of lower channels 354.

The connection channel 356 may be disposed at the other end (+Y axis direction) of the cooling tube 310 opposite the cooling fluid inlet/outlet 370 to maximize the cooling channel 350.

In this embodiment, in the circulation of the cooling fluid in the cooling channel 350, the cooling fluid supplied from the cooling fluid feed port 374 may be fed to the upper channel 352 close to the busbar assembly 200 and then flow to the cooling fluid exit port 376 through the connection channel 356 and the lower channel 354.

Accordingly, in this embodiment, since the cold cooling fluid is fed to an area close to the busbar assembly 200 having a higher temperature distribution in the battery pack 1, it is possible to remarkably improve the cooling performance of the battery cells 100.

The cooling fluid inlet/outlet 370 may be connected to the cooling tube 310 such that it is in communication with the cooling channel 350 of the cooling tube 310. The cooling fluid inlet/outlet 370 may be exposed to the outside of the side structure unit 400 as described below and connected in communication with an external cooling line.

The cooling fluid inlet/outlet 370 may be disposed on one side (-Y axis direction) of the battery pack 1 in the lengthwise direction (Y axis direction). The cooling tube 310 connected to the cooling fluid inlet/outlet 370 may be formed with a predetermined length from the cooling fluid inlet/outlet 370 toward the other side (+Y axis direction) of the battery pack 1 in the lengthwise direction (Y axis direction) of the battery pack 1.

The cooling fluid inlet/outlet 370 may include inlet/outlet bodies 371, 372, the cooling fluid feed port 374 and the cooling fluid exit port 376.

The inlet/outlet bodies 371, 372 may be connected to one end (-Y axis direction) of the cooling tube 310. The inlet/outlet bodies 371, 372 may include the feed port body 371 and the exit port body 372.

The feed port body 371 may cover one end (-Y axis direction) of the cooling tube 310, and be coupled to the exit port body 372 as described below. The feed port body 371 may have a feed port through-hole 371a through which the cooling fluid feed port 374 as described below passes. The cooling fluid feed port 374 as described below may communicate with the upper channel 352 as described below through the cooling fluid guide portion 318 via the feed port through-hole 371a. Specifically, the cooling fluid feed port 374 as described below may communicate with the upper channel 352 as described below through the cooling fluid guide portion 318 disposed at the upper part (+Z axis direction) of the cooling fluid guide portion 318 of the cooling tube 310.

The exit port body 372 located on the opposite side to the feed port body 371 may be coupled to the feed port body 371 with one end (-Y axis direction) of the cooling tube 310 interposed between, and cover one end (-Y axis direction) of the cooling tube 310. Here, the exit port body 372 and the feed port body 371 may be assembled to each other through press hemming.

The exit port body 372 may have an exit port through-hole 372a through which the cooling fluid exit port 376 as described below passes. The cooling fluid exit port 376 as described below may communicate with the lower channel 354 as described below through the cooling fluid guide portion 318 via the exit port through-hole 372a. Specifically, the cooling fluid exit port 376 as described below may communicate with the lower channel 354 as described below through the cooling fluid guide portion 318 disposed at the lower part (-Z axis direction) of the cooling fluid guide portion 318 of the cooling tube 310.

The cooling fluid feed port 374 may be disposed in the feed port body 371 of the inlet/outlet bodies 371, 372 and connected in communication with the upper channel 352. Here, the cooling fluid feed port 374 may be coupled to the feed port body 371 by caulking. The cooling fluid feed port 374 may be connected in communication with the external cooling line.

The cooling fluid exit port 376 may be disposed in the exit port body 372 of the inlet/outlet bodies 371, 372 and connected in communication with the lower channel 354. Here, the cooling fluid exit port 376 may be coupled to the exit port body 372 by caulking. The cooling fluid exit port 376 may be spaced a predetermined distance apart from the cooling fluid feed port 374 and connected in communication with the external cooling line.

Referring back to FIG. 2, the battery pack 1 may include the side structure unit 400.

The side structure unit 400 may be made of a plastic resin, and may support the battery cells 100, ensure the stiffness of the battery cells 100 and form the side appearance of the battery pack 1.

Hereinafter, the side structure unit 400 will be described in more detail through the following related drawings.

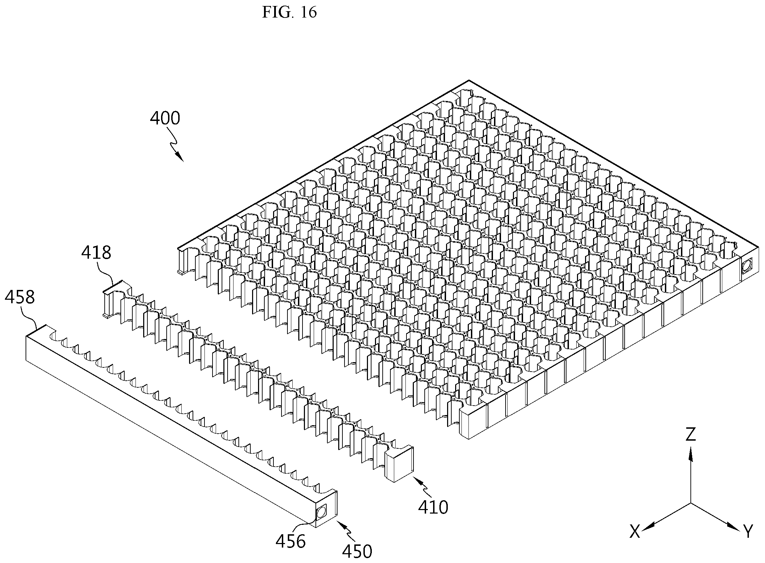

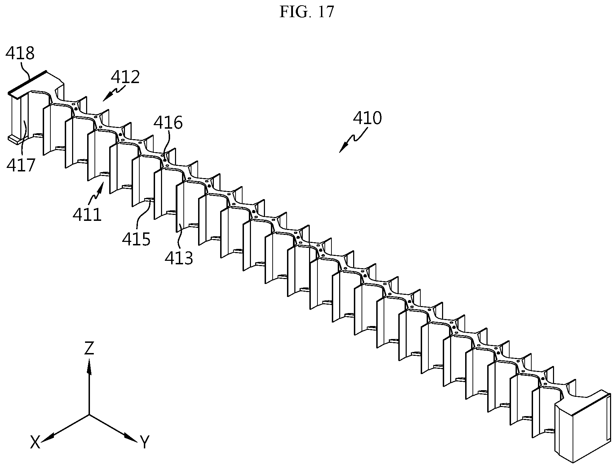

FIG. 16 is a diagram illustrating the side structure unit of the battery pack of FIG. 2, and FIG. 17 is a diagram illustrating a main plate of the side structure unit of FIG. 16.

Referring to FIGS. 16 and 17, the side structure unit 400 may act as a pack case to support the battery cells 100, ensure the stiffness of the battery cells 100, and form the side of the battery pack 1 (see FIG. 2) to form the appearance of the battery pack 1 (see FIG. 2).

The side structure unit 400 may be formed with a predetermined length along the lengthwise direction (Y axis direction) of the battery pack 1, and may accommodate and support the battery cells 100.

The side structure unit 400 may include the main plate 410 and an end plate 450.

The main plate 410 may be formed with the predetermined length along the lengthwise direction (Y axis direction) of the battery pack 1, and may accommodate the battery cells 100 such that the battery cells 100 are arranged in two rows in the widthwise direction (X axis direction) of the battery pack 1. The main plate 410 may include a plurality of main plates 410, and the plurality of main plates 410 may be arranged spaced a predetermined distance apart from each other along the widthwise direction (X axis direction) of the battery pack 1.

The plurality of main plates 410 may ensure the stiffness of the battery cells 100 and the cooling unit 300 and reduce the injection amount of the filler member 500 as described below due to a predetermined space occupied in the battery pack 1 (see FIG. 2). Since the filler member 500 comprising the silicone resin as described below is relatively high in price, it is possible to reduce the injection amount of the silicone resin through the plurality of main plates 410, thereby achieving price competitiveness in the fabrication of the battery pack 1.

Each of the plurality of main plates 410 may include a first cell accommodation portion 411, a second cell accommodation portion 412, an inter-wing 413, a bottom rib 415, a busbar guide protrusion 416, a cooling unit insertion groove 417 and a guide step 418.

The first cell accommodation portion 411 may be disposed on the front side of the main plate 410 (+X axis direction) along the lengthwise direction (Y axis direction) of the main plate 410. The first cell accommodation portion 411 may accommodate the plurality of battery cells 100 arranged in the lengthwise direction (Y axis direction) of the battery pack 1. To this end, the first cell accommodation portion 411 may include a plurality of first cell accommodation portions 411 on the front side (+X axis direction) of the main plate 410.

Each of the plurality of first cell accommodation portions 411 may have a concave shape corresponding to the outer surface of the battery cell 100, and cover at least part of the outer surface of the battery cell 100.

The second cell accommodation portion 412 may be disposed on the rear side of the main plate 410 (-X axis direction) along the lengthwise direction (Y axis direction) of the main plate 410. The second cell accommodation portion 412 may accommodate the plurality of battery cells 100 arranged in the lengthwise direction (Y axis direction) of the battery pack 1. To this end, the second cell accommodation portion 412 may include a plurality of second cell accommodation portions 412 on the rear side (-X axis direction) of the main plate 410.

Each of the plurality of second cell accommodation portions 412 may have a concave shape corresponding to the outer surface of the battery cell 100, and cover at least part of the outer surface of the battery cell 100.

The plurality of second cell accommodation portions 412 may be arranged with the plurality of first cell accommodation portions 411 in a staggered pattern in the front-rear direction (X axis direction) of the main plate 410 to accommodate as many battery cells 100 or cylindrical secondary batteries as possible.

The inter-wing 413 may include a plurality of inter-wings 413, and protrude along the widthwise direction (X axis direction) of the main plate 410 to define the plurality of first and second cell accommodation portions 411, 412. Specifically, the plurality of inter-wings 413 may be formed on both the front side (+X axis direction) and the rear side (-X axis direction) in the widthwise direction (X axis direction) of the main plate 410. More specifically, among the plurality of inter-wings 413, the inter-wings 413 protruding in the frontward direction (+axis direction) of the main plate 410 may define the plurality of first cell accommodation portions 411, and among the plurality of inter-wings 413, the inter-wings 413 protruding in the rearward direction (-axis direction) of the main plate 410 may define the plurality of second cell accommodation portions 412.

The bottom rib 415 may be disposed on the bottom of the main plate 410 to support the bottom of the battery cells 100 when the battery cells 100 are received in the main plate 410.

The bottom rib 415 may protrude in a further downward direction (-Z axis direction) than the bottom of the battery cells 100 when the battery cells 100 are received in the main plate 410.

The busbar guide protrusion 416 may be configured to secure the connection busbar unit 230 when assembling the busbar assembly 200, and disposed on the upper surface of the main plate 410. The busbar guide protrusion 416 may include at least one busbar guide protrusion 416. Hereinafter, this embodiment will be described based on a plurality of busbar guide protrusion 416.

The plurality of busbar guide protrusions 416 may be inserted into the guide holes 246 of the busbar cover 240 when assembling the busbar assembly 200, and guide the placement of the connection busbar unit 230 in position. Since the connection busbar unit 230 is inserted into or coupled or secured to the plurality of busbar guide protrusions 416, it is possible to perform the welding process for electrical connection of the busbar assembly 200 more stably, thereby further improving the welding quality in the welding process.

The cooling unit insertion groove 417 may be configured to receive the end of the cooling unit 300, and may be disposed at an end of the main plate 410 in the lengthwise direction (Y axis direction). When the main plates 410 are coupled, the end of the cooling unit 300 may be securely disposed in the cooling unit insertion groove 417 more stably.

The guide step 418 may protrude to a predetermined height at two upper ends in the lengthwise direction (Y axis direction) of the main plate 410. The guide step 418 may form the edge of the side structure unit 400 together with an end guide step 458 of the end plate 450 as described below when the assembly of the side structure unit 400 is completed by the coupling of the main plates 410 and the end plate 450 as described below.

The end plate 450 may include a pair of end plates 450, and the pair of end plates 450 may be disposed on two outermost sides of the side structure unit 400 in the widthwise direction (X axis direction). The pair of end plates 450 may accommodate and support the battery cells 100 together with the main plate 410 disposed opposite.

The pair of end plates 450 may have a terminal hole 456 and the end guide step 458.

The terminal hole 456 may be configured to accommodate the connector terminal 290, and may be disposed on one side at the end of the end plate 450.

The end guide step 458 may be formed along the upper edge of the end plate 450, and may protrude to the equal height to the guide step 418. The end guide step 458 may form the edge of the side structure unit 400 together with the guide step 418 of the main plates 410 when the assembly of the side structure unit 400 is completed.

Hereinafter, the coupling structure of the battery cells 100 and the cooling units 300 through the side structure unit 400 will be described in more detail.

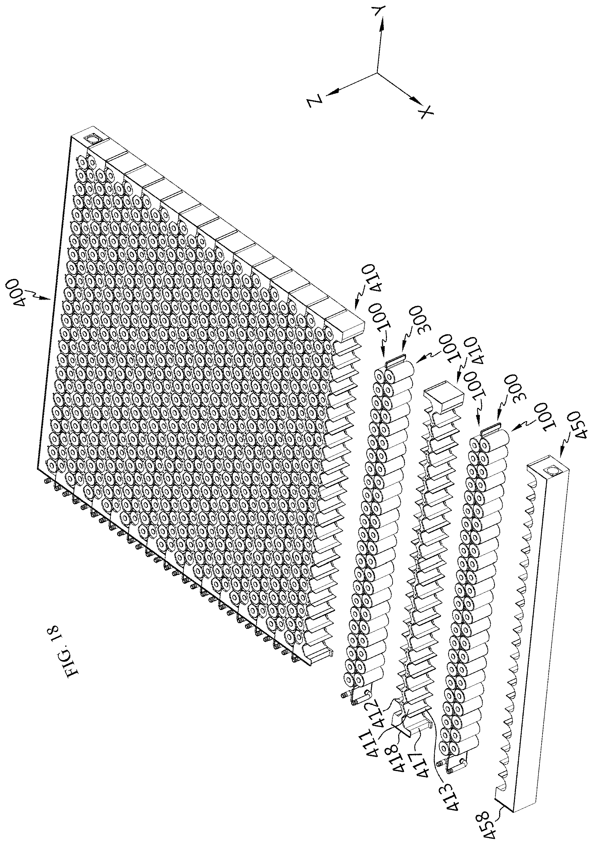

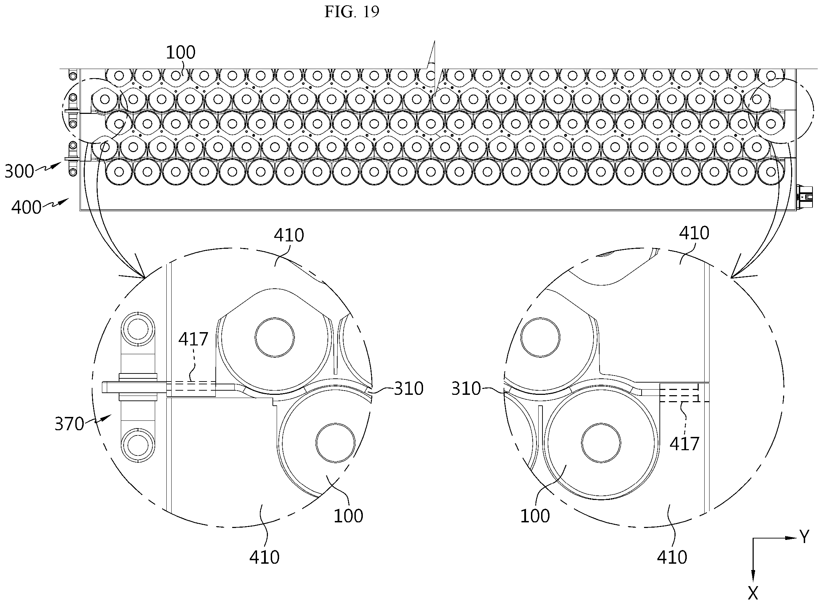

FIGS. 18 and 19 are diagrams illustrating the coupling structure of the battery cells and the cooling units through the side structure unit of FIG. 16.

Referring to FIGS. 18 and 19, first, the cooling tube 310 of the cooling unit 300 may be inserted in between the battery cells 100 arranged in two rows in the front-rear direction along the widthwise direction (X axis direction) of the battery pack 1 among the battery cells 100 (see FIG. 2). The side structure unit 400 may accommodate the facing battery cells 100 in the front-rear direction (X axis direction) of the battery cells 100 into which the cooling tube 310 is inserted.

Specifically, the end plate 450 on the outermost side, the battery cells 100, the cooling tube 310, the battery cells 100 and the main plate 410 may be arranged in the widthwise direction (X axis direction) of the battery pack 1 (see FIG. 2), and in turn, the battery cells 100, the cooling tube 310, the battery cells 100 and the main plate 410 may be arranged and coupled in that order. Subsequently, the end plate 450 on the opposite outermost side in the widthwise direction (X axis direction) of the battery pack 1 (see FIG. 2) may be finally disposed and coupled to complete the coupling of the side structure unit 400 so that the battery cells 100 and the cooling units 300 may be received in the side structure unit 400.

Here, when the main plates 410 are coupled and the main plate 410 is coupled to the end plate 450, two ends of the cooling unit 300 may be inserted into the cooling unit insertion groove 417, thereby preventing interference with the cooling unit 300 and securing the cooling unit 300 more stably.

Meanwhile, the cooling fluid inlet/outlet 370 at one end of the cooling units 300 may protrude out of the side structure unit 400 for connection to the external cooling line.

The side structure unit 400 according to this embodiment may accommodate the battery cells 100 and the cooling units 300 and form the side structure of the battery pack 1 (see FIG. 2) through the coupling between the main plates 410 and the end plates 450. That is, the side structure unit 400 may act as the pack case that forms the appearance of the battery pack 1.

Accordingly, the battery pack 1 (see FIG. 1) according to this embodiment may eliminate the need for any other additional pack case or pack housing structure through the side structure unit 400, thereby reducing the manufacturing cost and the total size of the battery pack 1, and increasing the energy density.

Referring back to FIG. 2, the filler member 500 may be filled in the space between the cooling unit 300 and the plurality of battery cells 100 in the heightwise direction (Z axis direction) of the battery pack 1. In FIG. 2, the filler member 500 is indicated by a dashed line in the shape of a hexahedron prism for convenience of understanding, and the filler member 500 may be fully filled in the space between the cooling unit 300 and the plurality of battery cells 100.

The filler member 500 may cover the upper and lower sides of the battery pack 1 (see FIG. 2) to form the pack case structure of the battery pack 1 together with the side structure unit 400.

Additionally, the filler member 500 may not only secure the plurality of battery cells 100 more stably but also increase the thermal dissipation efficiency of the plurality of battery cells 100, thereby improving the cooling performance of the battery cells 100.

Furthermore, the filler member 500 may prevent infiltration of water or impurities into the battery cells 100, prevent fire spread when thermal events occur due to faults or failure in the battery cells 100, and increase the structural stiffness of the battery pack 1.

The filler member 500 may comprise the potting resin. The potting resin may be formed by injecting a thin resin material into the plurality of battery cells 100 and curing it. Here, the injection of the resin material may be performed at room temperature of about 15°C to 25°C to prevent thermal damage of the plurality of battery cells 100.

Specifically, the filler member 500 may comprise the silicone resin. The filler member 500 is not limited thereto, and may comprise any other resin material capable of securing the battery cells 100 and improving the thermal dissipation efficiency.

The filler member 500 may have a preset viscosity, and include at least two materials. Specifically, the filler member 500 may be a mixture of a predetermined resin and beads at a preset ratio. The filler member 500 may reduce the potting resin cost through the mixing with the beads, and adjust the properties of the filler member 500 such as viscosity according to the mix ratio.

The filler member 500 may include glass bubbles as the beads. The glass bubbles may increase the energy density per weight by reducing the weight of the filler member 500. Meanwhile, the filler member 500 may have the viscosity of about 250 cP when a resin component is mixed with a curing agent, and when the resin and the glass bubbles are mixed at 100 : 60 (resin: glass bubbles), may have the viscosity of about 1590 cP. The mixing with the glass bubbles in the filler member 500 will be described in more detail in the following related description.

Since the filler member 500 covers the non-contact area between the battery cells 100 and the cooling tube 310, and thereby guides the heat balance of the battery cells 100, it is possible to prevent the cooling imbalance of the battery cells 100 and prevent the local degradation of the battery cells 100. Additionally, through the local degradation prevention of the battery cells 100, it is possible to remarkably improve the safety of the battery cells 100.

Additionally, the filler member 500 may act as an insulator to obstruct the flow of current to the adjacent battery cells 100 when damage occurs due to an abnormal situation in at least one specific battery cell 100 among the plurality of battery cells 100.

In addition to the battery cells 100, the filler member 500 may be filled in the busbar assembly 200. Specifically, the filler member 500 may be filled in the busbar assembly 200 to cover the upper side of the busbar assembly 200.

Here, the filler member 500 may be continuously filled in between the busbar assembly 200 and the battery cells 100 without a break or gap between the busbar assembly 200 and the battery cells 100 in the up-down direction (Z axis direction) of the battery cells 100.

Since the filler member 500 according to this embodiment is continuously filled in the battery cells 100 and the busbar assembly 200 without discontinuity, it is possible to achieve uniform heat distribution in the area between the battery cells 100 and the busbar assembly 200 without imbalance in heat distribution, thereby remarkably improving the cooling performance of the battery pack 1.

Furthermore, the filler member 500 may be filled to cover the area except the side of the side structure unit 400. Here, the filler member 500 may be continuously filled in the battery cells 100, the busbar assembly 200 and the side structure unit 400 without discontinuity. Accordingly, it is possible to further improve the cooling performance of the battery pack 1.

Additionally, the filler member 500 may further include a material having high specific heat capacity. Accordingly, the filler member 500 may increase the thermal mass to delay the temperature rise of the battery cells 100 in a situation such as fast charging and discharging of the battery cells 100, thereby preventing the rapid temperature rise of the battery cells 100.

Additionally, the filler member 500 may further include a material having high heat resistance performance. Accordingly, the filler member 500 may effectively prevent thermal runaway to the adjacent battery cells when thermal events occur due to overheating in at least one specific battery cell 100 among the plurality of battery cells 100.

Additionally, the filler member 500 may further include a material having high flame retardancy performance. Accordingly, the filler member 500 may minimize fire risks when thermal events occur due to overheating in at least one specific battery cell 100 among the plurality of battery cells 100.

Hereinafter, the pack case structure formation through the injection of the filler member 500 will be described in more detail.

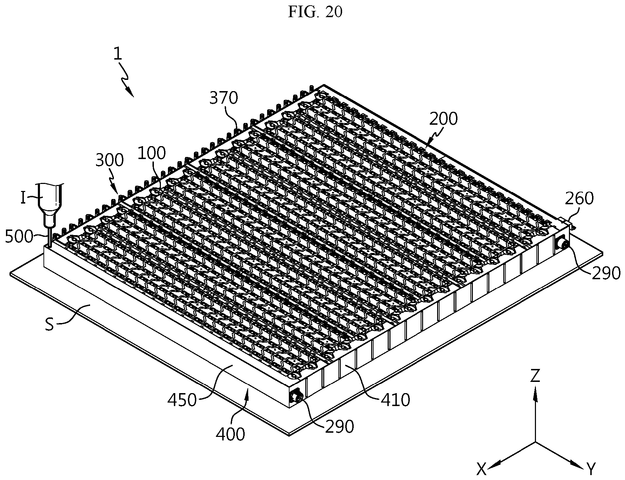

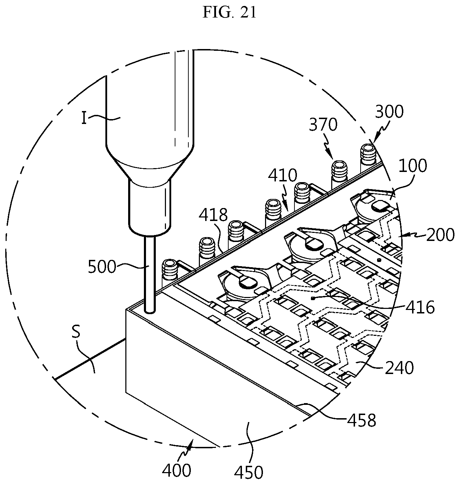

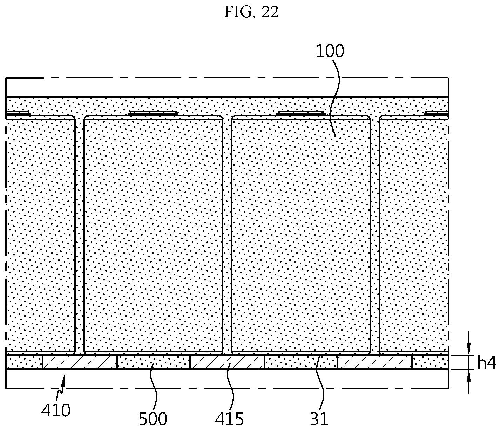

FIGS. 20 to 22 are diagrams illustrating the pack case structure formation through the filler member injection of the battery pack of FIG. 2.

Referring to FIGS. 20 to 22, the manufacturer may form the pack case structure of the upper and lower parts of the battery pack 1 (see FIG. 2) through the filler member 500 comprising the resin material by injecting and applying the filler member 500 comprising the mixture of resin and glass bubbles through a resin injector I. Specifically, the filler member 500 may cover the upper side of the busbar assembly 200 at the upper part (+Z axis direction) of the battery pack 1 and the bottom of the battery cells 100 at the lower part (-Z axis direction) of the battery pack 1, and be filled up to a protrusion height h4 of the bottom rib 415. Here, the protrusion height h4 of the bottom rib 415 may be designed with a predetermined height, taking into account the injection amount of the filler member 500.

In the process of injecting and applying the filler member 500 through the resin injector I, an injection guider S may be disposed below the side structure unit 400 to prevent the resin from leaking in the downward direction (-Z axis direction) during the injection of the filler member 500. The injection guider S may be made of Teflon for easy removal after the curing of the filler member 500.

Meanwhile, in the process of injecting and applying the filler member 500, it is more important to reduce the manufacturing cost and time in order to increase the manufacturing efficiency, and to increase the effect of the filler member 500 injected.

To reduce the manufacturing cost and time, it is necessary to inject the filler member 500 faster. The injection rate of the filler member 500 may be determined by the viscosity of the filler member 500, the structure of the side structure unit 400 accommodating the battery cells 100 and the discharge flow rate of the resin injector I.

Here, in relation to the viscosity of the filler member 500, when injecting the filler member 500, a low viscosity resin may be injected. Since the filling rate of the resin decreases with increasing viscosity, to increase the manufacturing efficiency, the low viscosity resin that may be filled at a specific rate or above may be applied.

For example, in the case where the amount of the filler member 500 to fill is 600 ml and the target process time is 100 sec, the filler member 500 is filled at the flow rate condition of 6 ml/sec. In view of this, when injecting the filler member 500, it is important to inject the low viscosity resin, and in this embodiment, the filler member 500 may have the viscosity of 2000 cP or less.

Furthermore, to reduce the cost of the potting resin and adjust the properties such as viscosity, the filler member 500 may be mixed with the glass bubbles as described above.

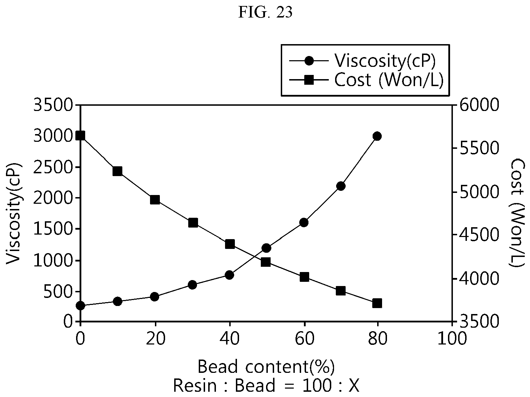

FIG. 23 is a graph showing test results of viscosity and manufacturing cost as a function of the mix ratio of the filler member of the battery pack of FIG. 32.

Referring to FIG. 23, the optimum viscosity and manufacturing cost may be taken into account for the mix ratio of the filler member 500. FIG. 23 schematically shows the results of the following Table 1.

In FIG. 23 and the following Table 1, the test was performed at resin : bead = 100 : X(%) in which beads are glass bubbles, where X increases from 0 to 80 by 10. In the test, a viscometer is LV type and spindle #63 and RPM was set to 12RPM.

Describing the test method, first, a preset mass of each of agent A and agent B was moved to each container. Subsequently, after measuring the bead mass, each of agent A and agent B was put in each container, followed by mixing. Subsequently, agent A and agent B were transferred to a 100 ml container and mixed through a stirrer at 1000 RPM for 10 minutes, and the viscosity of the mixed resin was measured using the viscometer.

**[Table 1]**

| Case | Bead content (%) 100: X | A (0.97g/C C) | A-bead (0.15g/C C) | B (0.97g/C C) | B-bead (0.15g/C C) | Viscosity (cP) | Cost (won/L) |
|---|---|---|---|---|---|---|---|
| 1(1:0) | 0 | 40.3ml(3 9.1g) | 0ml | 40.3ml(3 9.1g) | 0ml | 250 | 5626 |
| 2(1:0.1) | 10 | 40ml(38. 8g) | 4ml(0.6g) | 40ml(38. 8g) | 4ml(0.6g) | 320 | 5235 |
| 3(1:0.2) | 20 | 40ml(38. 8g) | 8ml(1.2g) | 40ml(38. 8g) | 8ml(1.2g) | 400 | 4908 |
| 4(1:0.3) | 30 | 40ml(38. 8g) | 12ml(1.8 g) | 40ml(38. 8g) | 12ml(1.8 g) | 590 | 4632 |
| 5(1:0.4) | 40 | 30ml(29. 1g) | 12ml(1.8 g) | 30ml(29. 1g) | 12ml(1.8 g) | 760 | 4396 |
| 6(1:0.5) | 50 | 30ml(29. 1g) | 15ml(2.2 5g) | 30ml(29. 1g) | 15ml(2.2 5g) | 1190 | 4191 |
| 7(1:0.6) | 60 | 30ml(29. 1g) | 18ml(2.7 g) | 30ml(29. 1g) | 18ml(2.7 g) | 1590 | 4011 |
| 8(1:0.7) | 70 | 30ml(29. 1g) | 21ml(3.1 5g) | 30ml(29. 1g) | 21ml(3.1 5g) | 2190 | 3853 |
| 9(1:0.8) | 80 | 30ml(29. 1g) | 24ml(3.6 g) | 30ml(29. 1g) | 24ml(3.6 g) | 2980 | 3712 |

As shown in FIG. 23 and the results of Table 1, as a result of the test, it can be seen that as the bead content increases, the viscosity increases and the cost reduces. As noted above, the viscosity of the filler member 500 is preferably 2000 cP or less, and in this embodiment, the mix ratio of resin and beads (glass bubbles) may be 100 : 60 (resin : glass bubble). Accordingly, in this embodiment, the filler member 500 comprising a mixture of resin and glass bubbles at the ratio of 100:60 may have the viscosity of about 1590 cP. For example, in this embodiment, when the required injection volume of resin is 3.5L on the basis of 24S 4P and the resin flow area between the battery cells 100, the cooling unit 300 and the side structure unit 400 is about 20,000 mm², as described above, the total area of the open spaces of the filler member injection holes 242, 244 may be designed to be equal to or larger than the resin flow area. That is, the total area of the open space of the filler member injection holes 242, 244 may be larger than 20,000 mm².

In the above-described condition, when the viscosity of the filler member 500 is 1590 cP, and the filler member 500 in which the mix ratio of resin and glass bubbles in the filler member 500 is 100 : 60 is injected at the resin flow rate of 0.37 LPM, the filler member 500 may be injected up to the required injection volume of resin of 3.5L by continually injecting the filler member 50 for about 9 minutes 30 seconds without delay during the injection.

As described above, in this embodiment, since the total area of the open spaces of the filler member injection holes 242, 244 is larger than the resin flow area and the mixed filler member 500 of low viscosity is injected, it may be possible to inject the filler member 500 without delay, thereby effectively injecting a desired amount of filler member 500 within the target process time.

Meanwhile, in the process of injecting and applying the filler member 500, the side structure unit 400 may act as a mold to support the battery cells 100 and the cooling unit 300 and prevent resin leaks together with the injection guider S.

Accordingly, in this embodiment, through the side structure unit 400, it may be possible to eliminate the need for an additional injection guider jig structure in the lateral direction in the process of injecting and applying the filler member 500, thereby reducing the manufacturing cost and remarkably improving the work efficiency.

Furthermore, the side structure unit 400 may guide the placement of the connection busbar unit 230 in position through the busbar guide protrusion 416 that is inserted into the connection busbar unit 230, thereby effectively preventing misposition or misalignment of the connection busbar unit 230 that may occur during the injection of the filler member 500.

Additionally, the guide step 418 and the end guide step 458 on the upper edge of the side structure unit 400 may increase the accuracy of the injection of the filler member 500, thereby making it easy to inject the filler member 500 to cover the busbar assembly 200 more exactly and effectively preventing the overflow of the filler member 500.

Here, since the side structure unit 400 exposes the components that are connected to an external device such as the interconnection board 260, the connector terminal 290 and the cooling fluid inlet/outlet 370, it may be possible to avoid interferences with these components when injecting or applying the filler member 500.

Accordingly, in this embodiment, since the pack case structure of the battery pack 1 (see FIG. 1) is formed through the side structure unit 400 and the filler member 500, compared to the conventional pack case structure formed as a complex assembly of plates, it is possible to simplify the assembly process of the battery pack 1 and significantly reduce the manufacturing cost, thereby achieving the price competitiveness.

Furthermore, in this embodiment, since the pack case structure is formed by the side structure unit 400 and the filler member 500, compared to the conventional pack case structure having a cell frame structure including an assembly of plates, it is possible to reduce the total size of the battery pack 1, thereby significantly increasing the energy density.

A method for manufacturing the battery pack 1 having the pack case structure formed by the side structure unit 400 and the filler member 500 according to the exemplary configuration of the present disclosure will be briefly described below.

When manufacturing the battery pack 1, the manufacturer may place the cooling unit 300 between the plurality of battery cells 100 and align them such that the battery cells 100 and the cooling unit 300 are received through the side structure unit 400. Additionally, the manufacturer may electrically connect the battery cells 100 in the open space of the filler member injection holes 242, 244 of the busbar assembly 200 having the filler member injection holes 242, 244 above the plurality of battery cells 100. Subsequently, the manufacturer may inject and apply the filler member 500 from top (+Z axis direction) to bottom (-Z axis direction) of the battery cells 100 along the vertical direction (Z axis direction) of the battery cells 100 through the open space of the filler member injection holes 242, 244.

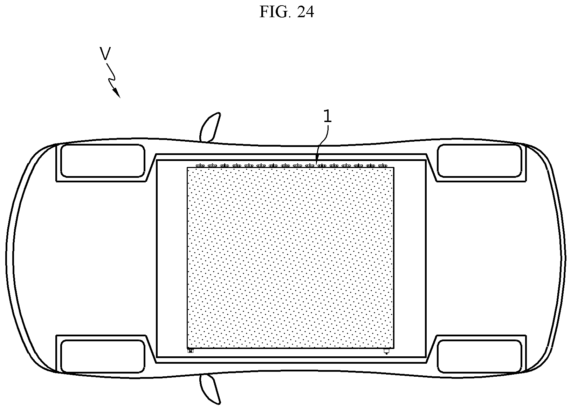

FIG. 24 is a diagram illustrating a vehicle according to an embodiment of the present disclosure.

Referring to FIG. 24, the vehicle V may be an electric vehicle or a hybrid electric vehicle, and may include at least one battery pack 1 of the previous embodiment as an energy source.

In this embodiment, since the above-described battery pack 1 has a compact structure with high energy density, it is easy to form a modularization structure of a plurality of battery packs 1 when mounted in the vehicle 1, and it is possible to ensure a relatively high degree of freedom in mounting in various shapes of the interior space of the vehicle V. That is, in this embodiment, the at least one battery pack 1 may have the battery pack case structure that is easy to form a modularization structure and has a high degree of freedom of mounting.

Additionally, the lengthwise direction of the at least one battery pack 1 may be perpendicular to the lengthwise direction of the vehicle so that the side structure unit 400 may protect the plurality of battery cells 100 in the event of a front-end or rear-end collision of the vehicle.

According to the above-described embodiments, it is possible to provide the battery pack 1 having improved energy density with more simple structure and the vehicle V including the same.

Additionally, according to the above-described embodiments, it is possible to provide the battery pack 1 with reduced manufacturing cost and time and improved manufacturing efficiency and the vehicle V comprising the same.

While the exemplary embodiment of the present disclosure has been hereinabove shown and described, the present disclosure is not limited to the above-described particular embodiment, and it is obvious that a variety of modifications may be made by those skilled in the art without departing from the claimed subject matter of the present disclosure, and such modifications should not be individually understood from the technical aspect or scope of the present disclosure.

## Claims

1. A battery pack, comprising:
a plurality of battery cells;
a filler member filled in a space between the plurality of battery cells; and
a busbar assembly electrically connected to the plurality of battery cells, and having a filler member injection hole for injecting the filler member.

2. The battery pack according to claim 1, wherein the busbar assembly is electrically connected to positive and negative electrodes of the battery cells in an open space of the filler member injection hole.

3. The battery pack according to claim 2, wherein the open space of the filler member injection hole is configured to expose the positive and negative electrodes of the battery cells.

4. The battery pack according to claim 2, wherein a total area of the open space is larger than a flow area of the filler member flowing between the battery cells after the filler member is injected.

5. The battery pack according to claim 1, wherein the filler member has a preset viscosity, and includes at least two materials.

6. The battery pack according to claim 5, wherein the filler member is a mixture of a predetermined resin and a predetermined bead at a preset ratio.

7. The battery pack according to claim 5, wherein the predetermined resin comprises a silicone resin.

8. The battery pack according to claim 5, wherein the predetermined bead comprises glass bubbles.

9. The battery pack according to claim 2, wherein the busbar assembly includes:
a pair of busbar covers disposed on one side of the plurality of battery cells, and having the filler member injection hole; and
a sub busbar disposed between the pair of busbar covers and connected to the positive and negative electrodes of the battery cells.

10. The battery pack according to claim 9, wherein the pair of busbar covers comprise a polyimide film.

11. The battery pack according to claim 9, wherein the sub busbar comprises a single layer, and is inserted in between the pair of busbar covers.

12. The battery pack according to claim 11, wherein the sub busbar includes:
a busbar bridge inserted in between the pair of busbar covers;
a positive connection portion extending from the busbar bridge, exposed within the open space of the filler member injection hole, and connected to the positive electrodes of the battery cells; and
a negative connection portion extending from the busbar bridge, exposed within the open space of the filler member injection hole, and connected to the negative electrodes of the battery cells.

13. The battery pack according to claim 12, wherein the filler member injection hole includes a plurality of filler member injection holes, and
wherein the plurality of filler member injection holes includes:
a positive busbar hole through which the positive connection portion is exposed, and having an open space which is larger in size than the positive connection portion; and
a negative busbar hole through which the negative connection portion is exposed, and having an open space which is larger in size than the negative connection portion.

14. The battery pack according to claim 12, wherein the filler member injection hole includes a plurality of filler member injection holes, and
wherein each of the plurality of filler member injection holes exposes the positive connection portion and the negative connection portion in a single open space.

15. The battery pack according to claim 14, wherein each of the plurality of filler member injection holes has the open space which is larger than a total size of the positive connection portion and the negative connection portion.

16. The battery pack according to claim 13, wherein the positive busbar hole and the negative busbar hole are disposed opposite each other with the busbar bridge interposed therebetween.

17. A method for manufacturing a battery pack, comprising:
placing a cooling unit between a plurality of battery cells and aligning them such that the battery cells and the cooling unit are received through a side structure unit;
electrically connecting the plurality of battery cells in an open space of a filler member injection hole of a busbar assembly having the filler member injection hole above the battery cells; and
injecting and applying the filler member from top to bottom of the battery cells along a vertical direction of the battery cells through the open space of the filler member injection hole.

18. The method for manufacturing the battery pack according to claim 17, wherein the filler member is a mixture of a predetermined resin and a predetermined bead at a preset ratio.

19. The method for manufacturing the battery pack according to claim 18, wherein the mix ratio of the predetermined resin and the predetermined bead is 100 : 60 (resin : glass bubbles).

20. A vehicle, comprising:
at least one battery pack according to any one of claims 1 to 16.
